# EUROPEAN PATENT APPLICATION

(11) **EP 4 712 536 A1**
(43) Date of publication of application: **18.03.2026**
(21) Application number: 24814136.8
(22) Date of filing: 09.05.2024
(51) Int. Cl.: H04W 16/22, G06F 21/57, H04L 9/40

(54) **TRUST ASSESSMENT METHOD, SYSTEM, AND RELATED DEVICE**

(30) Priority: 01.06.2023 CN 202310645708
(71) Applicant: Huawei Technologies Co., Ltd., Shenzhen, Guangdong 518129 (CN)
(72) Inventor: LIU, Xiang, Shenzhen, Guangdong 518129 (CN); WANG, Haiguang, Shenzhen, Guangdong 518129 (CN); LI, Tieyan, Shenzhen, Guangdong 518129 (CN)
(74) Representative: Körber, Martin Hans
(86) International application number: PCT/CN2024/091999
(87) International publication number: WO 2024/244935

(57) **Abstract**

This application provides a trust assessment method and system, and a related device. The method includes: A trust level assessor TLA performs trust assessment on a trustee based on a first trust level assessment TLA profile and evidence submitted by the trustee, to obtain a trust level of the trustee. The evidence includes one or more claims, and the one or more claims are used to describe related information of the trustee. The first TLA profile includes a plurality of trust levels and an assessment model corresponding to each trust level. The assessment model corresponding to each trust level includes a verification result of one or more claims required by the trust level. The trust assessment system and method provided in this application can be used for trust assessment of a network device in different network scenarios, to resolve a problem that trust level assessment models in different scenarios in a heterogeneous network cannot be unified. In this way, a trust level assessment method with certain flexibility and interoperability can be provided, to ensure network security and trustworthiness.

## Description

This application claims priority to Chinese Patent Application No. 202310645708.1, filed with the China National Intellectual Property Administration on June 1, 2023 and entitled "TRUST ASSESSMENT METHOD AND SYSTEM, AND RELATED DEVICE", which is incorporated herein by reference in its entirety.

### TECHNICAL FIELD

This application relates to the field of computer technologies, and in particular, to a trust assessment method and system, and a related device.

### BACKGROUND

In recent years, with rapid development of technologies such as the mobile Internet, big data, and artificial intelligence (Artificial Intelligence, AI), a network infrastructure including a mobile communication network, the Internet, and the like has huge social and economic values. As a network value becomes increasingly prominent, network security has a huge value accordingly, and even becomes an important part of national security.

A future network (for example, a 6G network) is a large-scale heterogeneous network with diverse service scenarios and different design stakeholders, making it difficult to adapt to all scenarios by using a unified trust level method. At a standard level, it is also difficult for a unified trust classification model to meet interests of different countries, different regions, different operators, or different device vendors, making it difficult to reach a consensus and achieve widespread application in the industry. Therefore, how to ensure network security and trustworthiness becomes an urgent problem to be resolved.

### SUMMARY

This application provides a trust assessment method and system, and a related device, to perform trust assessment on a network device in different network scenarios, so as to ensure network security and trustworthiness.

According to a first aspect, this application provides a trust assessment method, applied to a trust assessment system including a trust level assessor (trust level assessor, TLA) and a trustee (trustee). The trust level assessor TLA performs trust assessment on the trustee based on a first trust level assessment TLA profile and evidence (evidence) submitted by the trustee, to obtain a trust level of the trustee. The evidence includes one or more claims, and the one or more claims are used to describe related information of the trustee. The first TLA profile includes a plurality of trust levels and an assessment model corresponding to each trust level. An assessment model corresponding to a first trust level includes a verification result of one or more claims required by the first trust level. The first trust level is any one of the plurality of trust levels. The TLA verifies the claim provided by the trustee to obtain a verification result of each claim, and then determines the trust level of the trustee based on the verification result of each claim of the trustee and a verification result required by each trust level.

The TLA is usually a computing device, for example, a server. The trustee is usually a network device, for example, a switch, a router, a wireless base station, or a virtualized network function in a core network.

This application provides a TLA profile used for trust level assessment and a trust assessment method based on the TLA profile, to perform trust assessment on a network device in different network scenarios, for example, a base station and a gateway in a communication network, and devices such as a switch and a router in an Internet, a data center network, or a campus network. This resolves a problem that trust level assessment models in different scenarios in a heterogeneous network cannot be unified, and avoids a problem that cross-domain and cross-scenario interoperation is difficult due to use of a non-standard and customized model. On the premise of achieving a specific consensus in the industry, a trust level assessment method with certain flexibility and interoperability can be provided, to ensure network security and trustworthiness.

In a possible implementation, the first TLA profile includes a claim list. The claim list includes one or more claim names. The claim name includes any one or more of an identifier of the trustee, software integrity, hardware integrity, a protocol status, an interface status, a security protocol, a cryptographic algorithm, or a key length. It should be understood that the claim list in the first TLA profile includes a claim name corresponding to the one or more claims in the evidence provided by the trustee.

The TLA stores one or more TLA profiles, and can perform trust assessment on different trustees by using different TLA profiles as required. For example, different types of trustees use different TLA profiles to perform trust assessment. Any TLA profile carries a claim list, and can indicate a claim that the trustee needs to submit when trust assessment is performed on the trustee by using the TLA profile.

In a possible implementation, the claim list in the first TLA profile further includes indication information corresponding to each claim name, and indication information corresponding to a first claim name indicates whether a claim corresponding to the first claim name is mandatory to be provided by the trustee when trust assessment is performed based on the first TLA profile, where the first claim name is one in the claim list in the first TLA profile.

In a possible implementation, the check result includes affirmed, partially affirmed, or violated. The verification result can reflect whether the claim submitted by the trustee complies with a TLA requirement and a degree of conformity.

In a possible implementation, the first TLA profile further includes metadata, and the metadata includes any one or more of a publisher identifier of a publisher of the first TLA profile, a TLA profile number (TLA profile number) of the first TLA profile, a version number of the first TLA profile, or validity time of the first TLA profile.

In a possible implementation, the first TLA profile further includes any one or more of an applicable country or region, an applicable device type, an extension field, or a publisher signature, where the applicable country or region indicates a country or region to which the first TLA profile is applicable; the applicable device type indicates a type of a device to which the first TLA profile is applicable, and the applicable device type includes a router, a wireless base station, and a virtualized network function in a core network; and the publisher signature is a signature of the publisher of the first TLA profile for the first TLA profile by using a private key. This can prevent the TLA profile from being tampered with.

In a possible implementation, the trust level of the trustee is carried in a trust level assessment certificate generated by the TLA; and the trust level assessment certificate further includes a first TLA profile number corresponding to the first TLA profile, and the first TLA profile number indicates a TLA profile used for performing trust assessment on the trustee.

Indicating the trust level in a form of certificate can ensure authenticity and tamper resistance of a trust assessment result. The TLA profile number used for performing assessment is added to the certificate, and the trust assessment result is bound to a corresponding TLA profile, so that a user of the trust level assessment result can obtain, through query, a specific method used for performing trust assessment, to further determine whether to establish a connection to the trustee.

In a possible implementation, the trust level assessment certificate further includes any one or more of a version number, a serial number, a signature algorithm identifier, a name of the TLA, validity time, a name of the trustee, public key information of the TLA, the identifier of the TLA, an identifier of the trustee, an evidence proof number of the evidence, a Merkle root, or a signature of the TLA.

The serial number uniquely identifies the trust level assessment certificate of the trustee.

The signature algorithm identifier indicates a signature algorithm used by the TLA to sign the trust level assessment certificate.

The validity time indicates validity time of the trust level assessment certificate.

The public key information of the TLA includes information about a public key corresponding to a private key of the TLA.

The evidence proof number of the evidence is a number returned by an evidence storage center to the trustee after the trustee submits the evidence to the evidence storage center. The evidence proof number of the evidence can ensure transparency of the evidence and avoid tampering and repudiation.

The Merkle root is generated by the trustee based on the claim in the evidence, and can be used by the TLA to confirm integrity and correctness of the evidence and prevent tampering of the evidence.

The signature of the TLA is a signature of the TLA for content of the trust level assessment certificate by using the private key, and can be used to confirm integrity and correctness of evidence, to prevent tamping of the content of the trust level assessment certificate.

In a possible implementation, the evidence further includes metadata of the trustee and/or a signature of the trustee; and the metadata of the trustee includes any one or more of the identifier of the trustee, a timestamp, a version number of the evidence, or the Merkle root.

The timestamp indicates time at which the trustee generates the evidence; the Merkle root is generated by the trustee based on the claim included in the evidence; and the signature of the trustee is a signature of the trustee for the claim included in the evidence by using a private key; or the signature of the trustee is a signature of the trustee for the claim included in the evidence and the metadata of the trustee by using a private key. Therefore, integrity and correctness of the evidence can be ensured, to prevent tamping of the evidence.

In a possible implementation, before the TLA performs the trust assessment on the trustee based on the TLA profile and the evidence, the method further includes:

The TLA receives a trust level assessment request, where the trust level assessment request includes the identifier of the trustee, and the trust level assessment request indicates to perform trust assessment on the trustee; then, the TLA sends an evidence request to the trustee, where the evidence request includes the claim name included in the claim list in the first TLA profile, and indicates the trustee to submit a claim corresponding to the claim name included in the claim list in the first TLA profile; and after receiving an evidence response that includes the evidence and that is returned by the trustee, the TLA performs trust assessment on the trustee based on the evidence.

In a possible implementation, the TLA stores one or more TLA profiles and a TLA profile use policy, and the use policy indicates a default TLA profile and a priority of each TLA profile. The first TLA profile is one of the one or more TLA profiles.

In a possible implementation, the trust level assessment request includes one or more TLA profile numbers, and indicates the TLA to select a TLA profile from TLA profiles corresponding to the one or more TLA profile numbers to perform trust assessment on the trustee. A party that submits the trust level assessment request can indicate the TLA profile for performing trust assessment on the trustee, so that the party that submits the trust level assessment request can trust the assessment result of the TLA more.

In a possible implementation, when the trust level assessment request includes the one or more TLA profile numbers, the TLA selects, based on a priority of each TLA profile, a TLA profile with a highest priority from the TLA profiles corresponding to the one or more TLA profile numbers as the first TLA profile.

In a possible implementation, when the trust level assessment request does not include the TLA profile number, the TLA selects the default TLA profile as the first TLA profile.

In a possible implementation, the evidence response submitted by the trustee to the TLA further includes the evidence proof number, and the evidence proof number is the number returned by the evidence storage center to the trustee after the trustee submits the evidence to the evidence storage center.

In a possible implementation, after the TLA obtains the trust level of the trustee and feeds back the trust level of the trustee to a party that sends the trust level assessment request, the TLA may further receive an update request, and re-perform trust assessment on the trustee based on the update request. The update request includes the identifier of the trustee. The TLA re-perform trust assessment on the trustee based on the foregoing process.

According to a second aspect, this application provides a trust assessment method, applied to a trust assessment system including a TLA and a trustee. The method includes: The trustee receives an evidence request sent by the trust level assessor TLA, where the evidence request includes a claim name included in a claim list in a first trust level assessment TLA profile, the claim name indicates the trustee to submit a claim corresponding to the claim name, and the claim corresponding to the claim name is used to describe related information of the trustee.

The trustee encapsulates the claim corresponding to the claim name into evidence, where the evidence includes one or more claims of the trustee.

The trustee sends the evidence indicating the claim to the TLA, for the TLA to perform trust assessment on the trustee based on the evidence and the first TLA profile, to obtain a trust level of the trustee, where the first TLA profile includes a plurality of trust levels and an assessment model corresponding to each trust level, an assessment model corresponding to a first trust level includes a verification result of one or more claims required by the first trust level, and the first trust level is one of the plurality of trust levels.

In a possible implementation, the evidence further includes metadata of the trustee and/or a signature of the trustee; and the metadata of the trustee includes any one or more of an identifier of the trustee, a timestamp, a version number of the evidence, or a Merkle root.

The timestamp indicates time at which the trustee generates the evidence; the Merkle root is generated by the trustee based on the claim in the evidence; and the signature of the trustee is a signature of the trustee for the claim in the evidence and the metadata of the trustee.

In a possible implementation, the claim list in the evidence request further includes indication information corresponding to each claim name, where indication information corresponding to a first claim name indicates whether a claim corresponding to the first claim name is mandatory to be provided by the trustee.

In a possible implementation, before the trustee receives the evidence request sent by the TLA, the method further includes: The trustee sends a trust level assessment request to the TLA, where the trust level assessment request may include one or more TLA profile numbers, and indicates the TLA to select a TLA profile from TLA profiles corresponding to the one or more TLA profile numbers to perform trust assessment on the trustee; or the trust level assessment request may not include a TLA profile number, and the TLA performs trust assessment on the trustee by using a default TLA profile.

In a possible implementation, after the trustee obtains the evidence, the method further includes: submitting the evidence to an evidence storage center, and receiving an evidence proof number returned by the evidence storage center to the trustee.

In a possible implementation, the evidence is carried in an evidence response sent by the trustee to the TLA, and the evidence response further includes the evidence proof number.

In a possible implementation, after the trustee receives the trust level of the trustee that is obtained after the TLA performs trust assessment on the trustee, the method further includes: The trustee sends an update request to the TLA, where the update request indicates the TLA to perform trust assessment on the trustee again. When a trust level assessment certificate of the trustee expires, one or more claims of the trustee are changed, a security event occurs on the trustee, or the like, the trustee sends the update request to the TLA.

According to a third aspect, this application provides a trust assessment system, including a TLA and a trustee.

The TLA is configured to send an evidence request to the trustee, where the evidence request includes a claim name included in a claim list in a first TLA profile, and indicates the trustee to submit a claim corresponding to the claim name included in the claim list in the first TLA profile.

The trustee is configured to encapsulate the claim corresponding to the claim name into evidence, where the evidence includes one or more claims of the trustee.

The TLA is further configured to perform trust assessment on the trustee based on the first TLA profile and the evidence, to obtain a trust level of the trustee, where the first TLA profile includes a plurality of trust levels and an assessment model corresponding to each trust level, and an assessment model corresponding to a first trust level includes a verification result of one or more claims required by the first trust level. The first trust level is one of the one or the plurality of trust levels.

For operations performed by the TLA in the foregoing trust assessment system, refer to the operations performed by the TLA in the first aspect or any possible implementation of the first aspect. For operations performed by the trustee in the foregoing trust assessment system, refer to the operations performed by the trustee in the second aspect or any possible implementation of the second aspect.

According to a fourth aspect, this application provides a trust assessment apparatus. The trust assessment apparatus is configured to implement the operations implemented by the TLA in the first aspect or any possible implementation of the first aspect. The trust assessment apparatus includes:
a communication module, configured to receive evidence submitted by a trustee, where the evidence includes one or more claims, and the one or more claims are used to describe related information of the trustee; and
a processing module, configured to perform trust assessment on the trustee based on a first trust level assessment TLA profile and the evidence, to obtain a trust level of the trustee, where the first TLA profile includes a plurality of trust levels and an assessment model corresponding to each trust level, an assessment model corresponding to a first trust level includes a verification result of one or more claims required by the first trust level, and the first trust level is one of the plurality of trust levels.

In a possible implementation, before the processing module performs trust assessment on the trustee based on the TLA profile and the evidence, the following is further included:

The communication module is further configured to: receive a trust level assessment request, where the trust level assessment request includes an identifier of the trustee, and the trust level assessment request indicates to perform trust assessment on the trustee; then send an evidence request to the trustee, where the evidence request includes a claim name included in the claim list in the first TLA profile, and indicates the trustee to submit a claim corresponding to the claim name included in the claim list in the first TLA profile; and perform trust assessment on the trustee based on the evidence after the TLA receives an evidence response that includes the evidence and that is returned by the trustee.

In a possible implementation, the TLA stores one or more TLA profiles and a TLA profile use policy, and the use policy indicates a default TLA profile and a priority of each TLA profile.

In a possible implementation, the trust level assessment request includes one or more TLA profile numbers, and indicates the TLA to select a TLA profile from TLA profiles corresponding to the one or more TLA profile numbers to perform trust assessment on the trustee.

In a possible implementation, when the trust level assessment request includes the one or more TLA profile numbers, the processing module is further configured to select, based on the priority of each TLA profile, a TLA profile with a highest priority from the TLA profiles corresponding to the one or more TLA profile numbers as the first TLA profile.

In a possible implementation, when the trust level assessment request does not include a TLA profile number, the processing module is further configured to select a default TLA profile as the first TLA profile.

In a possible implementation, after the processing module obtains the trust level of the trustee, and feeds back the trust level of the trustee to a party that sends the trust level assessment request through the communication module, the communication module may further receive an update request, and the processing module is further configured to re-perform trust assessment on the trustee based on the update request. The update request includes the identifier of the trustee. The processing module performs trust assessment on the trustee again based on the foregoing process.

According to a fifth aspect, this application provides a trust assessment apparatus. The trust assessment apparatus is configured to implement operations implemented by the trustee in the second aspect or any possible implementation of the second aspect. The trust assessment apparatus includes:
a receiving module, configured to receive an evidence request sent by a trust level assessor TLA, where the evidence request includes a claim name included in a claim list in a first trust level assessment TLA profile, the claim name indicates the trustee to submit a claim corresponding to the claim name, and the claim corresponding to the claim name is used to describe related information of the trustee;
a processing module, configured to encapsulate the claim corresponding to the claim name into evidence, where the evidence includes one or more claims of the trustee; and
a sending module, configured to send the evidence to the TLA, for the TLA to perform trust assessment on the trustee based on the evidence and the first TLA profile, to obtain a trust level of the trustee, where the first TLA profile includes a plurality of trust levels and an assessment model corresponding to each trust level, an assessment model corresponding to a first trust level includes a verification result of one or more claims required by the first trust level, and the first trust level is one of the plurality of trust levels.

In a possible implementation, the evidence further includes metadata of the trustee and/or a signature of the trustee; and the metadata of the trustee includes any one or more of an identifier of the trustee, a timestamp, a version number of the evidence, or a Merkle root.

The timestamp indicates time at which the trustee generates the evidence; the Merkle root is generated by the trustee based on the claim in the evidence; and the signature of the trustee is a signature of the trustee for the claim in the evidence and the metadata of the trustee.

In a possible implementation, the claim list in the evidence request further includes indication information corresponding to each claim name, where indication information corresponding to a first claim name indicates whether a claim corresponding to the first claim name is mandatory to be provided by the trustee.

In a possible implementation, before the receiving module receives the evidence request sent by the TLA, the sending module is further configured to send a trust level assessment request to the TLA, where the trust level assessment request may include one or more TLA profile numbers, and indicate the TLA to select a TLA profile from TLA profiles corresponding to the one or more TLA profile numbers to perform trust assessment on the trustee. Alternatively, the trust level assessment request may not include a TLA profile number, and the TLA performs trust assessment on the trustee by using a default TLA profile.

In a possible implementation, after the processing module obtains the evidence, the sending module is further configured to submit the evidence to an evidence storage center. The receiving module is further configured to receive an evidence proof number returned by the evidence storage center to the trustee.

In a possible implementation, the evidence is carried in an evidence response sent by the trustee to the TLA, and the evidence response further includes the evidence proof number.

In a possible implementation, after the receiving module receives the trust level of the trustee that is obtained after the TLA performs trust assessment on the trustee, the sending module is further configured to send an update request to the TLA, where the update request indicates the TLA to perform trust assessment on the trustee again. When a trust level assessment certificate of the trustee expires, one or more claims of the trustee are changed, a security event occurs on the trustee, or the like, the trustee sends the update request to the TLA.

According to a sixth aspect, this application provides a computing device, including a processor and a memory. The memory is configured to store instructions, and the processor is configured to execute the instructions. When the processor executes the instructions, the method according to the first aspect or any possible implementation of the first aspect is implemented.

According to a seventh aspect, this application provides a network device, including a processor and a memory. The memory is configured to store instructions, and the processor is configured to execute the instructions. When the processor executes the instructions, the method according to the second aspect or any possible implementation of the second aspect is implemented.

According to an eighth aspect, this application provides a computer-readable storage medium, including computer program instructions. When the computer program instructions are executed by a computing device, the computing device implements the method according to the first aspect or any possible implementation of the first aspect.

According to a ninth aspect, this application provides a computer-readable storage medium, including computer program instructions. When the computer program instructions are executed by a computing device, the computing device implements the method according to the second aspect or any possible implementation of the second aspect.

According to a tenth aspect, this application provides a computer program product. When the computer program product runs on a server, the server is enabled to perform the method according to the first aspect or any possible implementation of the first aspect.

According to an eleventh aspect, this application provides a computer program product. When the computer program product runs on a network device, the server is enabled to perform the method according to the second aspect or any possible implementation of the second aspect.

### BRIEF DESCRIPTION OF DRAWINGS

To describe technical solutions in embodiments of this application more clearly, the following briefly describes the accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is a diagram of a trust assessment system according to an embodiment of this application;
FIG. 2 is a diagram of a trust level assessment profile according to an embodiment of this application;
FIG. 3 is a diagram of another trust level assessment profile according to an embodiment of this application;
FIG. 4 is a diagram of a trust level assessment certificate according to an embodiment of this application;
FIG. 5 is an interaction diagram of a trust assessment method according to an embodiment of this application;
FIG. 6 is a diagram of a trust assessment apparatus according to an embodiment of this application;
FIG. 7 is a diagram of another trust assessment apparatus according to an embodiment of this application;
FIG. 8 is a diagram of a computing device according to an embodiment of this application; and
FIG. 9 is a diagram of a network device according to an embodiment of this application.

### DESCRIPTION OF EMBODIMENTS

The following describes technical solutions of this application with reference to accompanying drawings.

In recent years, with rapid development of technologies such as mobile Internet, big data, and AI, a network infrastructure including a mobile communication network, the Internet, and the like indicates huge social and economic values. As a network value becomes increasingly prominent, network security also presents a huge value, and even becomes an important part of national security.

The 5th generation mobile communication system (5G) adopts a brand-new service-based architecture (Service-based Architecture, SBA), introducing new technologies such as network function virtualization, network slicing, and edge computing. As more services are migrated to the cloud, a conventional network boundary is broken. Openness of the architecture, introduction of new technologies, and cloud-network convergence make security risks faced by networks more complex. With the upcoming 6G era, cloud and network are further converged, a service-based concept continues to be deeply implemented, and space-air-ground integration is achieved. Due to an evolution trend of a plurality of architectures, it is difficult for conventional external type and patch type security mechanisms to effectively support security and trustworthiness of huge services and traffic carried on a next-generation network. Therefore, it is urgent to integrate a security and trustworthiness concept into a network architecture in an architecture design phase of the next-generation network, to provide a next-generation network that is natively trustworthy.

Trust is a complex concept, and has complex attributes such as subjectivity, context relevance, and dynamicity. Therefore, for the next-generation network, how to accurately access a trust level or a trust degree of an object (a device, a service, or the like) is a critical problem. A main difficulty lies in that a future network is a distributed heterogeneous network, and an entire ecosystem includes a plurality of stakeholders, and consequently it is difficult to reach a consensus on a trust assessment model. In addition, it is also difficult to implement interoperable trust level assessment in a cross-operator and cross-domain scenario. Therefore, designing an expandable, interoperable, and flexible trust level assessment framework to ensure network security and trustworthiness becomes an urgent problem to be resolved.

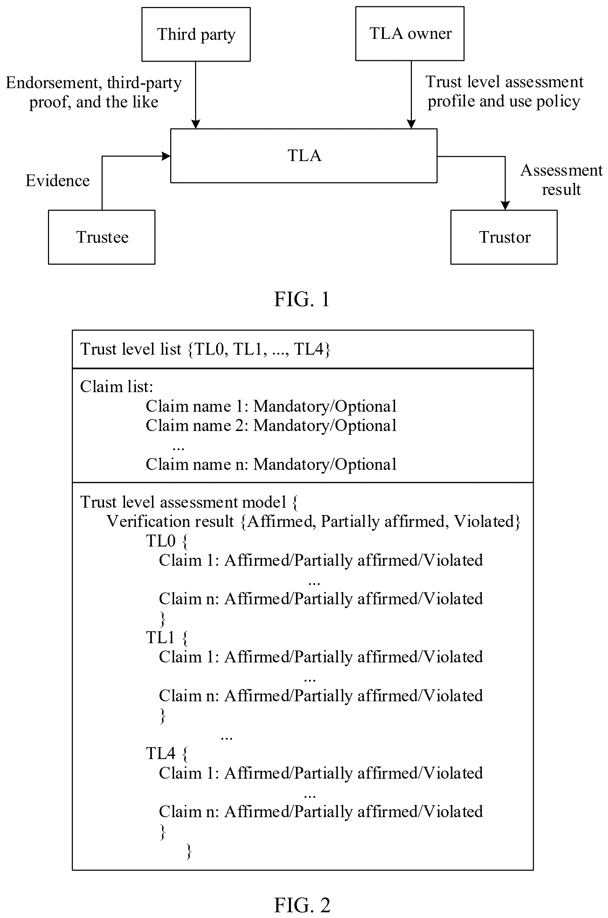

This application provides a trust assessment system. FIG. 1 is a diagram of a trust assessment system according to an embodiment of this application. The trust assessment system includes a trust level assessor (trust level assessor, TLA) and a trustee (trustee). The TLA is configured to: obtain evidence (evidence) submitted by the trustee from the trustee, perform trust assessment on the trustee based on the evidence to obtain a trust level of the trustee, and then send the trust level of the trustee to a party that requests to perform trust assessment on the trustee or the trustee. The evidence includes one or more claims, and each claim is used to describe related information of the trustee, for example, software integrity, a protocol status, and a cryptographic algorithm of the trustee.

The trustee is configured to: generate the evidence and send the evidence to the TLA, so that the TLA accesses the trust level of the trustee based on the evidence submitted by the trustee. The TLA is usually a computing device, for example, a server. The trustee is usually a network device, for example, a switch, a router, a wireless base station, or a virtualized network function in a core network.

Optionally, the trust assessment system may further include a trustor (trustor), configured to establish a connection to the trustee based on the trust level of the trustee. After obtaining the trust level of the trustee, the TLA may send the trust level of the trustee to the trustor. The trustor may be a network device, a network controller, a network management system, or the like. The network controller may be a software defined network (software defined network, SDN) controller, a path computation element (path computation element, PCE), or the like.

Optionally, the trust assessment system further includes a TLA owner (owner), configured to deliver a trust level assessment profile (trust level assessment profile, TLA profile), a use policy, and the like to the TLA. The TLA profile includes a trust level assessment model for performing trust assessment. The TLA performs trust assessment on the trustee based on one TLA profile. The use policy is a policy for selecting the TLA profile when the TLA performs trust assessment. The TLA owner is an owner of a network in which the TLA and the trustee are located. The TLA owner is usually an enterprise or an organization, for example, an operator. The TLA owner delivers the TLA profile and the use policy to the TLA through a computing device. In this embodiment of this application, for ease of description, the TLA owner represents the computing device used by the TLA owner. The TLA profile and the use policy are described below. Details are not described herein.

Optionally, the trust assessment system further includes a third party (third party), configured to provide a third-party endorsement, a third-party proof, and the like of the trustee for the TLA owner. The third party is usually a manufacturer of the trustee.

In this embodiment of this application, after receiving a trust level assessment request for performing trust assessment on the trustee, the TLA obtains the evidence (evidence) submitted by the trustee, where the evidence includes one or more claims (claims), and then performs trust assessment on the trustee based on the first TLA profile and the one or more claims submitted by the trustee, to obtain the trust level of the trustee. The first TLA profile includes a plurality of trust levels and an assessment model corresponding to each trust level, an assessment model corresponding to a first trust level includes a verification result of one or more claims required by the first trust level, and the first trust level is one of the plurality of trust levels. It should be understood that the TLA stores one or more TLA profiles, and the first TLA profile is one of the one or more TLA profiles.

The trust level (trust level, TL) is used to describe a degree of trust of a subject (for example, the trustor) in an object (for example, the trustee). In this embodiment of this application, trust levels are classified into five levels: untrusted (untrusted), minimally trusted (minimally trusted), moderately trusted (moderately trusted), highly trusted (highly trusted), and fully trusted (fully trusted). For ease of description, in this embodiment of this application, TL0 to TL4 sequentially correspond to the foregoing five trust levels. To be specific, TL0 corresponds to untrusted, TL1 corresponds to minimally trusted, TL2 corresponds to moderately trusted, TL3 corresponds to highly trusted, and TL4 corresponds to fully trusted. It should be understood that the foregoing classification of trust levels is merely an example, and cannot be understood as a specific limitation. The trust levels may alternatively include fewer or more levels. This is not specifically limited in embodiments of this application.

In this embodiment of this application, the TLA profile (including the first TLA profile) includes a plurality of trust levels and an assessment model corresponding to each trust level, the assessment model corresponding to the first trust level includes the verification result of the one or more claims required by the first trust level, and the first trust level is one of the plurality of trust levels. That is, an assessment model corresponding to a trust level includes a verification result corresponding to each of one or more claims. When a claim submitted by the trustee meets a verification result required by each claim included in the trust level (for example, TL2), it indicates that the trust level of the trustee is TL2. The verification result includes affirmed (affirmed), partially affirmed (partially affirmed), or violated (violated).

FIG. 2 is a diagram of a trust level assessment profile according to an embodiment of this application.

The TLA profile includes a trust level list and a trust level assessment model. The trust level list includes the plurality of trust levels, and indicates trust levels that may appear in an assessment result when the TLA performs trust assessment by using the TLA profile. In FIG. 2, an example in which five levels TL0 to TL4 are included is used. The trust level assessment model includes an assessment model corresponding to each trust level. An assessment model corresponding to one trust level includes a verification result of one or more claims required by the trust level. The verification result includes affirmed (affirmed), partially affirmed (partially affirmed), or violated (violated), and indicates a result of a claim that may appear when the TLA verifies the claim. It should be understood that FIG. 2 shows only a format of the trust level assessment model. For a determined TLA profile, a verification result required by each claim in the assessment model corresponding to each trust level is determined.

For example, if claims corresponding to an assessment model in a TLA profile include four claims: claim 1 to claim 4, an assessment model corresponding to TL0 is shown below.

```
          TL0 {
                      claim 1: affirmed;
                      claim 2: affirmed;
                      claim 3: partially affirmed;
                      claim 4: violated.
          }
```

The assessment model corresponding to TL0 indicates that when trust assessment is performed on a trustee by using the TLA profile, in the claims provided by the trustee is "compliant", if a verification result of the claim 1, a verification result of the claim 2 is "compliant", a verification result of the claim 3 is "partially affirmed", and a verification result of the claim 4 is "violated", it is determined that a trust level of the trustee is TL0.

The TLA profile further includes a claim list (claim list), and the claim list includes one or more claim names, indicating claims that need to be provided by the trustee when the trust assessment is performed on the trustee by using the TLA profile. In this embodiment of this application, the claim name includes any one or more of an identifier of the trustee, software integrity, hardware integrity, a protocol status, an interface status, a security protocol, a cryptographic algorithm, or a key length.

In a possible implementation, the claim list further includes indication information corresponding to each claim name. Indication information corresponding to a claim name indicates whether a claim corresponding to the claim name is mandatory (mandatory) or optional (optional) when trust assessment is performed by using the TLA profile. If the indication information corresponding to the claim name is "mandatory", it indicates that the trustee needs to provide a claim corresponding to the claim name when trust assessment is performed by using the TLA profile. If the indication information corresponding to the claim name is "optional", it indicates that the trustee may provide or may not provide a claim corresponding to the claim name when trust assessment is performed by using the TLA profile. It should be understood that FIG. 2 shows only a format of the claim list. For a specific TLA profile, whether a claim corresponding to each claim name is mandatory or optional is determined.

For example, a claim list of a TLA profile is shown as follows.

```
          Claim list {
                          claim name 1: Mandatory
                          claim name 2: Mandatory
                          claim name 3: Optional;
                          claim name 4: Mandatory.
          }
```

In this case, when trust assessment is performed by using the TLA profile, the trustee needs to provide a claim corresponding to the claim name 1, a claim corresponding to the claim name 2, and a claim corresponding to the claim name 4, and may provide a claim corresponding to the claim name 3, or may not provide a claim corresponding to the claim name 3.

It should be noted that if the claim list does not include indication information corresponding to a claim name, it indicates that a claim corresponding to each claim name in the claim list is mandatory.

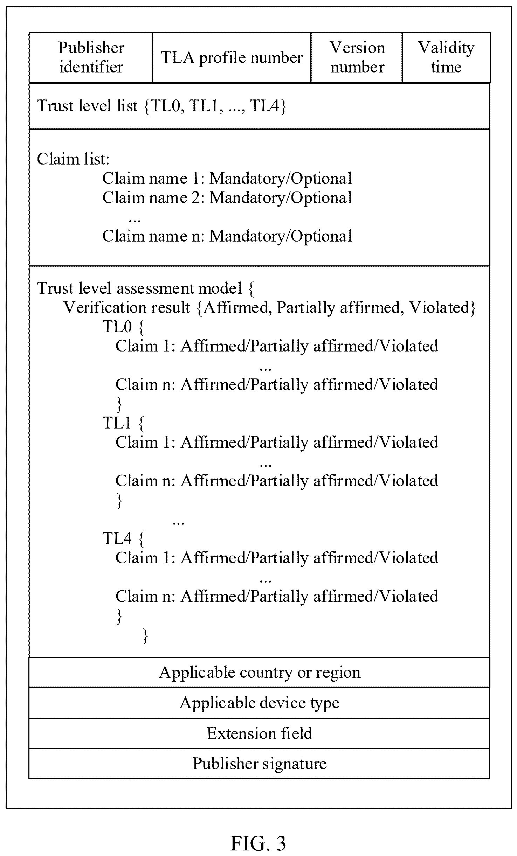

FIG. 3 is a diagram of another trust level assessment profile according to an embodiment of this application. The TLA profile further includes metadata (metadata) of the TLA profile. The metadata includes any one or more of a publisher (publisher) identifier, a trust level assessment profile number (TLA profile number), a version number (version), or validity time (validity time).

The publisher identifier indicates a publisher of the TLA profile, and uniquely identifies the publisher of the TLA profile. The TLA profile number uniquely identifies the TLA profile. The validity time indicates validity time of the TLA profile. It should be understood that the validity time may be a time point, indicating that the TLA profile may be used for trust assessment before the time point. The validity time may alternatively be a time period, indicating that the TLA profile may be used for trust assessment in a period represented by the time period. The metadata of the TLA profile may further include other data, for example, a publish address which indicates an address at which the publisher publishes the TLA profile. The publish address may be a uniform resource locator (uniform resource locator, URL).

In a possible implementation, the TLA profile further includes any one or more of an applicable country or region, an applicable device type, an extension field, or a publisher signature.

The applicable country or region indicates a country or region to which the TLA profile is applicable. The applicable device type indicates a type of a device to which the TLA profile is applicable, that is, a trust level of a device of which type can be accessed by using the TLA profile. The applicable device type includes a router, a wireless base station, a virtualized network function in a core network, and the like. The publisher signature includes a signature of the TLA profile that is signed by the publisher of the TLA profile by using a private key.

It should be understood that the TLA may further include other information, for example, a public key certificate which indicates a public key certificate corresponding to the private key used by the publisher of the TLA profile.

In this embodiment of this application, before performing trust assessment on the trustee, the TLA sends an evidence request (evidence request) to the trustee. The evidence request indicates the trustee to provide evidence (evidence) for trust assessment. The evidence request includes one or more claim names. The one or more claim names are claim names included in a claim list in a TLA profile used by the TLA to perform trust assessment on the trustee. It should be noted that if the claim list in the TLA profile includes indication information corresponding to each claim name, the evidence request also includes the indication information corresponding to each claim name. In other words, the evidence request includes the claim list in the first TLA profile used by the TLA to perform trust assessment on the trustee.

Optionally, the evidence request further includes an identifier (identifier, ID) of the trustee.

Optionally, the evidence request may further include a TLA profile number of the TLA profile used by the TLD, and indicates the TLA profile used by the TLA to perform trust assessment on the trustee.

Optionally, the evidence request further includes a nonce (nonce) generated by the TLA, used to prevent a replay attack.

After receiving the evidence request, the trustee returns an evidence response (evidence response) to the TLA. The evidence response indicates evidence (evidence), and the evidence includes a claim provided by the trustee based on a proof list included in the evidence request. It should be understood that if each claim name in the claim list in the evidence request corresponds to indication information, and if indication information corresponding to a claim name is "optional (optional)", the trustee may provide a claim corresponding to the claim name, or may not provide a claim corresponding to the claim name. In other words, a quantity of claims submitted by the trustee may be less than a quantity of claim names included in the claim list in the evidence request.

In a possible implementation, the evidence may further include metadata (metadata) of the trustee. The metadata includes any one or more of an identifier of the trustee, a timestamp (timestamp), a version number (version) of the evidence, and a Merkle root (merkle root).

The timestamp indicates time at which the trustee generates the evidence, and the Merkle root is generated by the trustee based on each claim provided to the TLA, and can be used by the TLA to confirm integrity and correctness of the evidence, to prevent the evidence from being tampered with.

In a possible implementation, the evidence may further include a signature (signature), and the signature is a signature of the trustee on the submitted claim and metadata.

Optionally, if the evidence request includes the TLA profile number, the evidence response further includes the TLA profile number.

Optionally, after generating the evidence, the trustee may further submit the evidence to a registry (registry). The registry is an evidence storage center, for example, a blockchain or a log system. The registry returns an evidence proof number (evidence proof number) to the trustee. The evidence proof number can ensure transparency of the evidence, and prevent tampering and repudiation. If the trustee submits the evidence to the registry and obtains an evidence proof number, the evidence response further includes the evidence proof number obtained by the trustee.

The TLA performs trust assessment on the trustee based on the received evidence response, to obtain an assessment result, namely, a trust level (trust level) of the trustee, and generates a trust level assessment (trust level assessment, TLA) certificate based on the assessment result. The TLA certificate includes the trust level of the trustee and the TLA profile number. The TLA profile number indicates a TLA profile used by the TLA to perform trust assessment on the trustee.

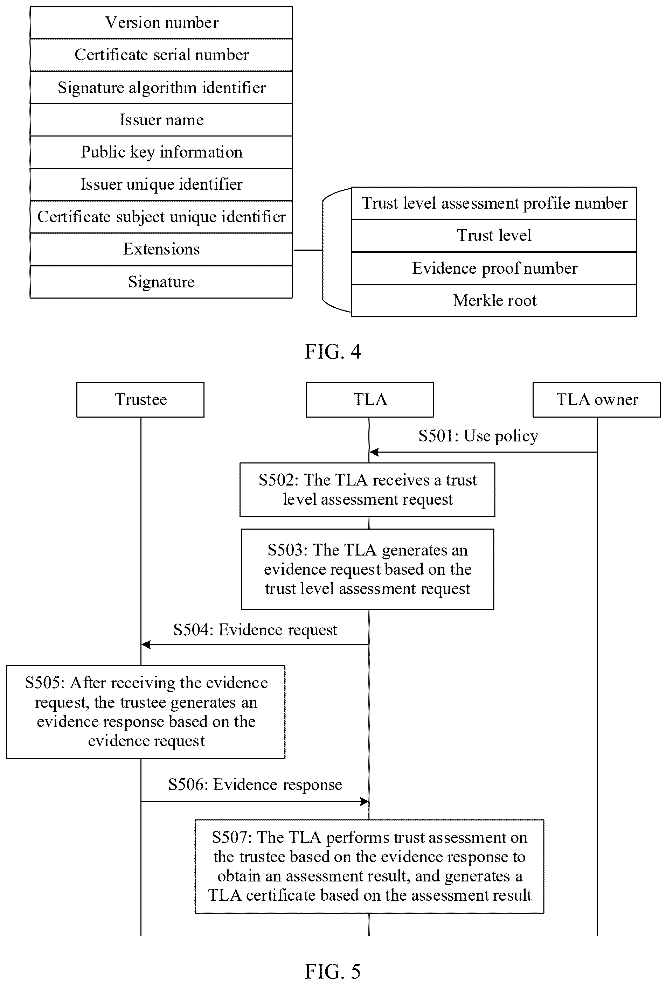

In a possible implementation, FIG. 4 is a diagram of a trust level assessment certificate according to an embodiment of this application. The TLA certificate includes any one or more of a version number (version), a serial number (serial number), a signature algorithm identifier (signature algorithm identifier), a TLA name, validity time (validity time), a trustee name, TLA public key information (public key information), a TLA identifier, an identifier of a trustee, an evidence proof number (evidence proof number), a Merkle root (Merkle root), or a TLA signature.

The version indicates a version of the certificate. The serial number uniquely identifies the trust level assessment certificate of the trustee.

The signature algorithm identifier indicates a signature algorithm used by the TLA to sign the trust level assessment certificate. The TLA name indicates a name of an issuer of the TLA certificate. The validity time indicates validity time of the TLA certificate. The trustee name indicates a trustee whose trust level is the trust level in the TLA certificate. The TLA public key information includes information about a public key corresponding to a private key used by the TLA. The TLA signature is a signature of the TLA on content of the TLA certificate.

It should be noted that the evidence proof number and the Merkle root in the TLA certificate are submitted by the trustee. If the evidence response submitted by the trustee includes the evidence proof number, the TLA certificate includes the evidence proof number (evidence proof number) submitted by the trustee. If the evidence response submitted by the trustee includes the Merkle root (Merkle root), the TLA certificate includes the Merkle root submitted by the trustee.

It should be understood that the TLA certificate may further include more information, for example, include a subject name of the certificate, namely, the name of the trustee. This is not specifically limited in embodiments of this application.

Fields included in the TLA certificate and functions of the fields are shown in Table 1 below. The trust level (trust level), the TLA profile number, the evidence proof number, and the Merkle root in the TLA certificate are located in an extension (extensions) field of the TLA certificate.

**Table 1**

| Fields | Functions |
|---|---|
| Version (version) | Indicates a version number |
| Certificate serial number (serial number) | Indicates the serial number |
| Signature algorithm identifier (signature algorithm identifier) | Indicates the signature algorithm identifier |
| Certificate issuer name (issuer name) | Indicates the certificate issuer name, namely, a name of the TLA in the TLA certificate |
| Validity time (validity time) | Indicates the validity time |
| Certificate subject name (subject name) | Indicates the certificate subject name, namely, the name of the trustee |
| Public key information (public key information) | Indicates the public key information of the certificate issuer, namely, the public key information of the TLA in the TLA certificate |
| Issuer unique identifier (issuer unique identifier) | Indicates the unique identifier of the certificate issuer, namely, the identifier of the TLA in the TLA certificate |
| Subject unique identifier (subject unique | Indicates the unique identifier of certificate |
| identifier) | subject, namely, the identifier of the trustee |
| Extensions (extensions) | Indicates a trust level, a TLA profile number, an evidence proof number, and a Merkle root. |
| Signature (signature) | Indicates the signature of the TLA certificate |

Indicating the trust level in a form of certificate can ensure authenticity and tamper resistance of a trust assessment result. The TLA profile number used for performing assessment is added to the certificate, and the trust assessment result is bound to a corresponding TLA profile, so that a user (for example, a trustor) of the trust level assessment result can obtain, through query, a specific method used for performing trust assessment, to further determine whether to establish a connection to the trustee.

The following describes, with reference to the accompanying drawings, a method for performing trust assessment on a trustee based on the TLA profile and the TLA certificate provided in this application. FIG. 5 is an interaction diagram of a trust assessment method according to an embodiment of this application. The trust assessment method includes S501 to S507.

S501: A TLA owner sends a use policy of a trust level assessment profile to a TLA.

In this embodiment of this application, the use policy includes a TLA list and priority information. The TLA list includes a TLA profile number corresponding to a TLA profile that can be used by the TLA to perform trust assessment. The priority information includes a priority of each TLA profile. For a format of the TLA profile and related descriptions, refer to related descriptions in FIG. 2 or FIG. 3. Details are not described herein again.

In a possible implementation, the use policy further includes a default TLA profile number. A method for selecting, by the TLA based on the use policy, a TLA profile used for trust assessment is described below. Details are not described herein again.

S502: The TLA receives a trust level assessment request.

The trust level assessment request (TLA request) includes an identifier (identifier, ID) of a trustee, and indicates to perform trust assessment on the trustee. The trust level assessment request may be sent by the trustee or a trustor. For example, the trustee needs to establish a connection to the trustor. Before the trustee sends a connection establishment request to the trustor, the trustee sends the trust level assessment request to the TLA. Alternatively, the trustee requests to establish a connection to the trustor. After receiving the request, the trustor initiates trust assessment on the trustee to the TLA, and sends the trust level assessment request to the TLA.

In a possible implementation, the trust level assessment request may further include an available TLA list. The available TLA list includes one or more TLA profile numbers, and indicates the TLA to select a TLA profile from the available TLA list to perform trust assessment on the trustee.

The TLA profile number included in the available TLA list may be a part or all of the TLA list. The TLA profile number included in the available TLA list may be determined after negotiation between the trustee and the TLA, or may be determined after negotiation among the trustee, the TLA, and the trustor. This is not specifically limited in embodiments of this application.

S503. The TLA generates an evidence request based on the trust level assessment request.

After receiving the trust level assessment request, the TLA determines to use a first TLA profile to perform trust assessment on the trustee, and generates an evidence request (evidence request) based on the first TLA profile. After confirming the first TLA profile, the TLA obtains a claim list in the first TLA profile, and carries the claim list in the evidence request, to indicate a claim that needs to be provided by the trustee to the TLA.

Optionally, the evidence request further includes an identifier (identifier, ID) of the trustee.

Optionally, the evidence request may further include a first TLA profile number, namely, a number corresponding to the first TLA profile used by the TLA, and indicate a TLA profile used by the TLA to perform trust assessment on the trustee.

Optionally, the evidence request further includes a nonce (nonce) generated by the TLA, used to prevent a replay attack.

The following describes a method for determining the first TLA profile by the TLA.

In a possible implementation, if the trust level assessment request does not include the available TLA list, the TLA selects a TLA profile with a highest priority from TLA profiles corresponding to the TLA list as the first TLA profile, to perform trust assessment on the trustee. If the use policy includes the default TLA profile number, the TLA selects a TLA profile corresponding to the default TLA profile number as the first TLA profile, to perform trust assessment on the trustee.

In a possible implementation, if the trust level assessment request includes the available TLA list, the TLA selects a TLA profile with a highest priority from TLA profiles corresponding to the available TLA list as the first TLA profile, to perform trust assessment on the trustee.

It should be noted that if there is no TLA profile corresponding to the TLA list or the available TLA list in the TLA, the TLA sends a profile obtaining request to the TLA owner. The profile obtaining request includes the TLA list or the available TLA list. After receiving the profile obtaining request, the TLA owner searches for a corresponding TLA profile based on a TLA profile number in the TLA list or the available TLA list in the profile obtaining request, and then sends the TLA profile to the TLA.

S504. The TLA sends an evidence request to the trustee.

S505. After receiving the evidence request, the trustee generates an evidence response based on the evidence request.

After receiving the evidence request, the trustee parses the evidence request to obtain a claim list in the evidence request, and generates, based on one or more claim names in the claim list, a claim corresponding to each claim name. It should be understood that if each claim name in the claim list in the evidence request corresponds to indication information, and if indication information corresponding to a claim name is "optional (optional)", the trustee may provide a claim corresponding to the claim name, or may not provide a claim corresponding to the claim name. In other words, a quantity of claims submitted by the trustee may be less than a quantity of claim names included in the claim list in the evidence request.

After generating, based on the claim list, the claim corresponding to each claim name, the trustee encapsulates the claim into evidence (evidence), generates an evidence response (evidence response), and sends the evidence response to the TLA. The evidence response includes the evidence. For content included in the evidence response and the evidence, refer to related descriptions in the foregoing embodiments. Details are not described herein again.

S506: The trustee sends the evidence response to the TLA.

S507: The TLA performs trust assessment on the trustee based on the evidence response to obtain an assessment result, and generates a TLA certificate based on the assessment result.

After receiving the evidence response sent by the trustee, the TLA obtains the claim in the evidence response, and performs trust assessment on the trustee based on the claim in the evidence response and a trust level assessment model in the first TLA profile, to obtain a trust level of the trustee. Specifically, the TLA verifies each claim provided by the trustee, and determines a verification result corresponding to each claim, that is, whether the verification result corresponding to each claim is affirmed (affirmed), partially affirmed (partially affirmed), or violated (violated). Then, the TLA determines the trust level (trust level) of the trustee based on the verification result corresponding to each claim and a verification result required by each claim in an assessment model corresponding to each trust level, namely, the assessment result.

For example, if claims corresponding to an assessment model in the first TLA profile include four claims: claim 1 to claim 4, an assessment model corresponding to the TL2 is shown below.

```
          TL2 {
                      claim 1: affirmed;
                      claim 2: affirmed;
                      claim 3: affirmed;
                      claim 4: partially affirmed.
          }
```

If a verification result of the claim 1 in the evidence provided by the trustee is "consistent", a verification result of the claim 2 is "consistent", a verification result of the claim 3 is "consistent", and a verification result of the claim 4 is "partially consistent", the TLA determines that the trust level of the trustee is TL2.

After obtaining the assessment result, namely, the trust level (trust level) of the trustee, the TLA generates a trust level assessment (trust level assessment, TLA) certificate based on the assessment result. For a format of the TLA certificate and meanings of fields, refer to the foregoing related descriptions of the TLA certificate. Details are not described herein again.

After generating the TLA certificate, the TLA sends the TLA certificate to a sender of the trust level assessment request. For example, if the trust level assessment list is sent by the trustee to the TLA, the TLA sends the TLA certificate to the trustee, so that the trustee uses the TLA certificate to establish a connection to the trustor.

In a possible implementation, after receiving the trust level assessment request for the trustee, the TLA may further send a third-party evidence obtaining request to the TLA owner. The third-party evidence obtaining request includes an identifier of the trustee, and is used to request the TLA to obtain third-party endorsement, third-party proof, and the like of the trustee provided by a third party (third party) for the TLA owner. After receiving the third-party evidence obtaining request, the TLA owner sends the third-party endorsement, third-party proof, and the like of the trustee provided by the third party (third party) for the TLA owner to the TLA. The TLA performs trust assessment on the trustee based on the evidence response, the third-party endorsement, the third-party proof, and the like.

In a possible implementation, after sending the TLA to the trustee, the TLA may further receive an update request. The update request includes the identifier of the trustee, and is used to request the TLA to re-perform trust assessment on the trustee.

Optionally, the update request further includes an original TLA certificate or a certificate serial number of an original TLA certificate.

Optionally, the update request further includes the available TLA list described in S502. The available TLA list includes one or more TLA profile numbers, and indicates the TLA to select a TLA profile from the available TLA list to perform trust assessment on the trustee.

Optionally, the update request may further include an update reason field, indicating a reason for updating the TLA certificate of the trustee. Different values of the update reason field indicate different update reasons. The update reason includes that the original TLA certificate expires, a claim changes because a configuration of the trustee changes, the trustee detects a security event (for example, a distributed denial of service (distributed denial of service, DDoS) attack), a TLA policy changes or a TLA profile is updated, the trustee has abnormal behavior, or the like. The abnormal behavior of the trustee includes that a packet loss rate is high, a neighboring node of the trustee detects that a connection to the trustee is disconnected, and the like.

In this application, the TLA profile used for trust level assessment, and a trust assessment system and an assessment method that are based on the TLA profile are provided, to perform trust assessment on a network device in different network scenarios, for example, a base station and a gateway in a communication network, and devices such as a switch and a router in an Internet, a data center network, or a campus network. This resolves a problem that trust level assessment models in different scenarios in a heterogeneous network cannot be unified, and avoids a problem that cross-domain and cross-scenario interoperation is difficult due to use of a non-standard and customized model. On the premise of achieving a specific consensus in the industry, a trust level assessment method with certain flexibility and interoperability can be provided, to ensure network security and trustworthiness. In addition, this application provides a certificate indicating a trust assessment result, namely, a trust level, to ensure authenticity and tamper resistance of the trust assessment result in a form of certificate.

According to the trust assessment method provided in this application, network devices in a network can be further classified into different trust levels, and end-to-end paths of different trust levels are constructed, to meet network security level requirements of different services or different traffic. For example, in the foregoing embodiment, the trust level is divided into five levels. When data of a service needs to be transmitted through a network device at a moderately trusted (TL2) level, the data can be transmitted only through a network device at a trust level of TL2 or higher.

It should be noted that content included in the TLA profile and content included in the TLA certificate described in the foregoing embodiment are both preferred embodiments. Other appropriate content that can be figured out by a person skilled in the art based on the foregoing described content also falls within the protection scope of the present invention.

For brief description, the foregoing method embodiments are all described as a combination of a series of actions. However, a person skilled in the art should understand that the present invention is not limited to the described action sequence. In addition, a person skilled in the art should also understand that all embodiments described in this specification are preferred embodiments, and the related actions are not necessarily mandatory to the present invention. Another appropriate step combination that a person skilled in the art can think of based on the content described above also falls within the protection scope of the present invention.

The foregoing describes in detail the trust assessment method provided in this application with reference to the accompanying drawings. The following describes an apparatus and a related device provided in embodiments of this application with reference to the accompanying drawings.

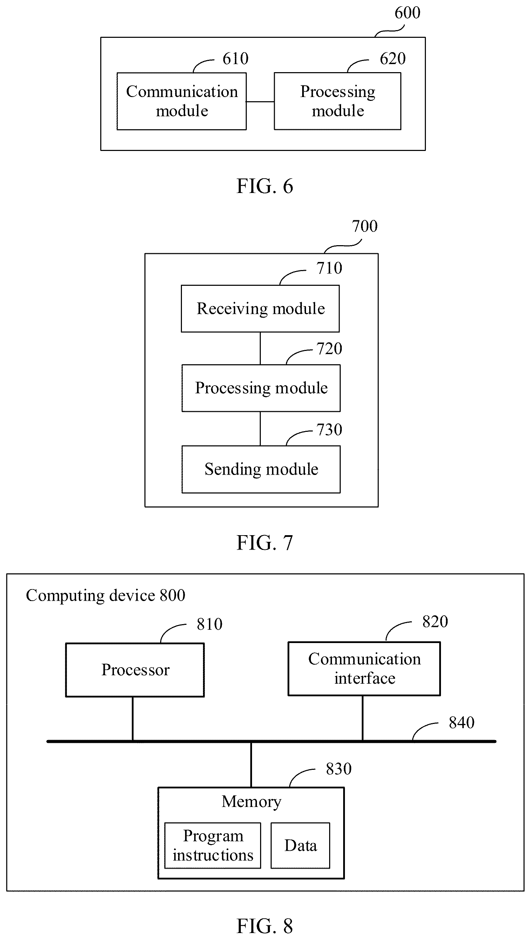

This application provides a trust level assessment apparatus. FIG. 6 is a diagram of a trust assessment apparatus according to an embodiment of this application. The trust assessment apparatus is configured to implement an operation implemented by a TLA in the foregoing trust assessment system. The trust assessment apparatus 600 includes a communication module 610 and a processing module 620.

The communication module 610 is configured to receive evidence submitted by a trustee. The evidence includes one or more claims, and the one or more claims are used to describe related information of the trustee. The processing module 620 is configured to perform trust assessment on the trustee based on a first trust level assessment TLA profile and the evidence, to obtain a trust level of the trustee. The first TLA profile includes a plurality of trust levels and an assessment model corresponding to each trust level. An assessment model corresponding to a first trust level includes a verification result of one or more claims required by the first trust level, and the first trust level is one of the plurality of trust levels.

In a possible implementation, before the processing module 620 performs trust assessment on the trustee based on the TLA profile and the evidence, the communication module 610 is further configured to: receive a trust level assessment request, where the trust level assessment request includes an identifier of the trustee, and the trust level assessment request indicates to perform trust assessment on the trustee; send an evidence request to the trustee, where the evidence request includes a claim name included in a claim list in the first TLA profile, and indicates the trustee to submit a claim corresponding to the claim name included in the claim list in the first TLA profile; and perform trust assessment on the trustee based on the evidence after the TLA receives an evidence response that includes the evidence and that is returned by the trustee.

In a possible implementation, when the trust level assessment request includes one or more TLA profile numbers, the processing module 620 is further configured to select, based on a priority of each TLA profile, a TLA profile with a highest priority from TLA profiles corresponding to the one or more TLA profile numbers as the first TLA profile.

In a possible implementation, when the trust level assessment request does not include a TLA profile number, the processing module 620 is further configured to select a default TLA profile as the first TLA profile.

In a possible implementation, after the processing module 620 obtains the trust level of the trustee and feeds back, through the communication module 610, the trust level of the trustee to a party that sends the trust level assessment request, the communication module 610 may further receive an update request. In this case, the processing module 620 is further configured to re-perform trust assessment on the trustee based on the update request. The update request includes the identifier of the trustee. The processing module performs trust assessment on the trustee again based on the foregoing process.

Specifically, for operations implemented by the communication module 610 in the trust assessment apparatus 600, refer to sending and receiving operations of the TLA in the foregoing method embodiments. For operations implemented by the processing module 620, refer to trust assessment operations performed by the TLA in the foregoing method embodiments. Details are not described herein again.

This application further provides another trust level assessment apparatus. FIG. 7 is a diagram of another trust assessment apparatus according to an embodiment of this application. The trust assessment apparatus is configured to implement an operation implemented by a trustee in the foregoing trust assessment system. The trust assessment apparatus 700 includes a receiving module 710, a processing module 720, and a sending module 730.

The receiving module 710 is configured to receive an evidence request sent by a trust level assessor TLA, where the evidence request includes a claim name included in a claim list in a first trust level assessment TLA profile, the claim name indicates the trustee to submit a claim corresponding to the claim name, and the claim corresponding to the claim name is used to describe related information of the trustee. The processing module 720 is configured to encapsulate the claim corresponding to the claim name into evidence, where the evidence includes one or more claims of the trustee. The sending module 730 is configured to send the evidence to the TLA, for the TLA to perform trust assessment on the trustee based on the evidence and a first TLA profile, to obtain a trust level of the trustee, where the first TLA profile includes a plurality of trust levels and an assessment model corresponding to each trust level, and an assessment model corresponding to a trust level includes a verification result of one or more claims required by the trust level.

In a possible implementation, before the receiving module 710 receives the evidence request sent by the TLA, the sending module 730 is further configured to send the trust level assessment request to the TLA, where the trust level assessment request may include one or more TLA profile numbers, and indicates the TLA to select a TLA profile from TLA profiles corresponding to the one or more TLA profile numbers to perform trust assessment on the trustee. Alternatively, the trust level assessment request may not include a TLA profile number, and the TLA performs trust assessment on the trustee by using a default TLA profile.

In a possible implementation, after the processing module 720 obtains the evidence, the sending module 730 is further configured to submit the evidence to an evidence storage center. The receiving module 710 is further configured to receive an evidence proof number returned by the evidence storage center to the trustee. In a possible implementation, the evidence is carried in an evidence response sent to the TLA, and the evidence response further includes the evidence proof number.

In a possible implementation, after the receiving module 710 receives the trust level of the trustee that is obtained after the TLA performs trust assessment on the trustee, the sending module 730 is further configured to send an update request to the TLA, where the update request indicates the TLA to perform trust assessment on the trustee again. Specifically, when a trust level assessment certificate of the trustee expires, one or more claims of the trustee change, a security event occurs in the trustee, or the like, the update request is sent to the TLA.

Specifically, for operations implemented by the receiving module 710 and the sending module 730 in the trust assessment apparatus 700, refer to sending and receiving operations of the trustee in the foregoing method embodiments. For operations implemented by the processing module 720, refer to operations of the trustee in the foregoing method embodiments. Details are not described herein again.

This application further provides a computing device. FIG. 8 is a diagram of the computing device according to an embodiment of this application. The computing device 800 includes one or more processors 810, a communication interface 820, and a memory 830. The one or more processors 810, the communication interface 820, and the memory 830 are connected to each other through a bus 840.

The processor 810 may be configured to implement an operation correspondingly performed by the TLA in the foregoing method embodiments. For a method for performing trust assessment on a trustee by the processor 810, refer to the descriptions in the foregoing method embodiments. Details are not described herein again.

The communication interface 820 may be a wired interface or a wireless interface, and is configured to communicate with another module or device, for example, receive a trust level assessment request, receive an evidence response submitted by the trustee, and send a TLA certificate to the trustee. The wired interface may be an Ethernet interface, a local interconnect network (local interconnect network, LIN), or the like, and the wireless interface may be a cellular network interface, a wireless local area network interface, or the like.

The memory 830 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 830 may alternatively be a volatile memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The memory 830 may be further configured to store program instructions and data, so that the processor 810 invokes the program instructions stored in the memory 830 to perform operation steps performed by the TLA in the foregoing method embodiments. In addition, the computing device 800 may include more or fewer components than those shown in FIG. 8, or may have different component configuration manners.

The bus 840 may be a peripheral component interconnect (peripheral component interconnect, PCI) bus, an extended industry standard architecture (extended industry standard architecture, EISA) bus, or the like. The bus 840 may be classified into an address bus, a data bus, a control bus, or the like. For ease of representation, only one thick line represents the bus in FIG. 8, but this does not mean that there is only one bus or only one type of bus.

It should be noted that the processor 810 may be a central processing unit (Central Processing Unit, CPU), or may include a CPU and another acceleration card. The acceleration card may have a plurality of types. For example, the acceleration card may be a coprocessor, and may include any one of chips such as a graphics processing unit (graphics processing unit, GPU), a tensor processing unit (tensor processing unit, TPU), a programmable logic device (programmable logic device, PLD), a complex programmable logic device (complex programmable logic device, CPLD), a field programmable gate array (field programmable gate array, FPGA), or a digital signal processor (digital signal processor, DSP). The computing device 800 may include one or more acceleration cards of any one of the foregoing types, or may include a plurality of types of the foregoing acceleration cards. This is not specifically limited in embodiments of this application.

Specifically, for specific implementations of performing various operations by the computing device 800, refer to specific operations performed by the TLA in the foregoing method embodiments. Details are not described herein again.

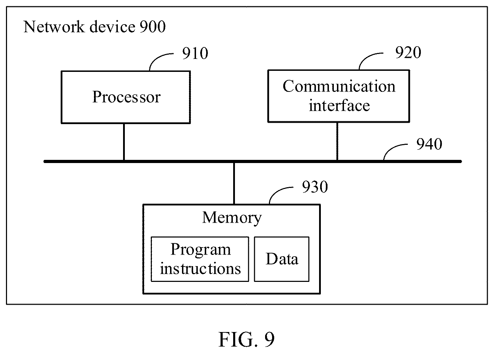

This application further provides a network device. FIG. 9 is a diagram of the network device according to an embodiment of this application. The network device 900 includes one or more processors 910, a communication interface 920, and a memory 930. The one or more processors 910, the communication interface 920, and the memory 930 are connected to each other through a bus 940.

The processor 910 may be configured to implement an operation correspondingly performed by the trustee in the foregoing method embodiments. For an implementation method of the processor 910, refer to the descriptions in the foregoing method embodiments. Details are not described herein again.

The communication interface 920 may be a wired interface or a wireless interface, and is configured to communicate with another module or device, for example, receive an evidence request sent by the TLA, a TLA certificate, and the like, and send the evidence response to the TLA. The wired interface may be an Ethernet interface, a local interconnect network (local interconnect network, LIN), or the like, and the wireless interface may be a cellular network interface, a wireless local area network interface, or the like.

The memory 930 may be a non-volatile memory, for example, a ROM, a PROM, an EPROM, an EEPROM, or a flash memory. The memory 930 may alternatively be a volatile memory. The volatile memory may be a RAM, and is used as an external high-speed cache. By way of example but not restrictive description, many forms of RAMs are applicable, such as an SRAM, a DRAM, an SDRAM, a DDR SDRAM, an ESDRAM, an SLDRAM, and a DR RAM.

The memory 930 may be further configured to store program instructions and data, so that the processor 910 invokes the program instructions stored in the memory 930 to perform operation steps performed by the trustee in the foregoing method embodiments. In addition, the network device 900 may include more or fewer components than those shown in FIG. 9, or may have different component configuration manners.

The bus 940 may be a PCI bus, an EISA bus, or the like. The bus 940 may be classified into an address bus, a data bus, a control bus, or the like. For ease of representation, only one thick line represents the bus in FIG. 9, but this does not mean that there is only one bus or only one type of bus.

It should be noted that the processor 910 may be a CPU, or may include a CPU and another chip. The another chip may have a plurality of types, for example, any one of chips such as a PLD, a CPLD, an FPGA, or a DSP. The network device 900 may include one or more chips of any one of the foregoing types, or may include a plurality of types of the foregoing chips. This is not specifically limited in embodiments of this application.

Specifically, for specific implementations of performing various operations by the network device 900, refer to specific operations performed by the TLA in the foregoing method embodiments. Details are not described herein again.

Embodiments of this application further provide a computer-readable storage medium. The computer-readable storage medium stores instructions. When the instructions are run on a processor, the method steps implemented by the TLA in the foregoing method embodiments may be implemented. For a specific implementation of performing the method steps by the processor of the computer-readable storage medium, refer to the specific operations in the foregoing method embodiments. Details are not described herein again.

Embodiments of this application further provide a computer-readable storage medium. The computer-readable storage medium stores instructions. When the instructions are run on a processor, the method steps implemented by the trustee in the foregoing method embodiments may be implemented. For a specific implementation of performing the method steps by the processor of the computer-readable storage medium, refer to the specific operations in the foregoing method embodiments. Details are not described herein again.

In the foregoing embodiments, the description of each embodiment has respective focuses. For a part that is not described in detail in an embodiment, refer to related descriptions in other embodiments.

All or some of the foregoing embodiments may be implemented by using software, hardware, firmware, or any combination thereof. When software is used to implement embodiments, all or some of the foregoing embodiments may be implemented in a form of computer program product. The computer program product includes one or more computer instructions. When the computer program instructions are loaded or executed on a computer, all or some of the procedures or functions are generated according to embodiments of the present invention. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk drive, or a magnetic tape), an optical medium, or a semiconductor medium. The semiconductor medium may be a solid-state drive (solid-state drive, SSD).

Steps in the methods in embodiments of this application may be sequentially adjusted, combined, or deleted based on an actual requirement. Modules in the apparatus in embodiments of this application may be divided, combined, or deleted based on an actual requirement.

Embodiments of this application are described in detail above. The principle and implementation of this application are described herein through specific examples. The description about embodiments of this application is merely provided to help understand the method and core ideas of this application. In addition, a person of ordinary skill in the art can make variations and modifications to this application in terms of the specific implementations and application scopes according to the ideas of this application. Therefore, the content of specification shall not be construed as a limitation to this application.

## Claims

1. A trust assessment method, comprising:
performing, by a trust level assessor TLA, trust assessment on a trustee based on a first trust level assessment TLA profile and evidence submitted by the trustee, to obtain a trust level of the trustee, wherein the evidence comprises one or more claims, and the one or more claims are used to describe related information of the trustee, wherein
the first TLA profile comprises a plurality of trust levels and an assessment model corresponding to each trust level, an assessment model corresponding to a first trust level comprises a verification result of one or more claims required by the first trust level, and the first trust level is one of the plurality of trust levels.

2. The method according to claim 1, wherein the first TLA profile comprises a claim list, the claim list comprises one or more claim names, and the claim name comprises any one or more of an identifier of the trustee, software integrity, hardware integrity, a protocol status, an interface status, a security protocol, a cryptographic algorithm, or a key length, wherein
the claim list in the first TLA profile comprises a claim name corresponding to the one or more claims in the evidence.

3. The method according to claim 2, wherein the claim list further comprises indication information corresponding to each claim name, and indication information corresponding to a first claim name indicates whether a claim corresponding to the first claim name is mandatory to be provided when trust assessment is performed based on the first TLA profile, wherein the first claim name is one in the claim list.

4. The method according to any one of claims 1 to 3, wherein the verification result comprises affirmed, partially affirmed, or violated.

5. The method according to any one of claims 2 to 4, wherein the first TLA profile further comprises metadata, and the metadata comprises any one or more of a publisher identifier of a publisher of the first TLA profile, a TLA profile number of the first TLA profile, a version number of the first TLA profile, or validity time of the first TLA profile.

6. The method according to any one of claims 2 to 5, wherein the first TLA profile further comprises any one or more of an applicable country or region, an applicable device type, an extension field, or a publisher signature, wherein
the applicable country or region indicates a country or region to which the first TLA profile is applicable;
the applicable device type indicates a type of a device to which the first TLA profile is applicable, and the applicable device type comprises a router, a wireless base station, and a virtualized network function in a core network; and
the publisher signature is a signature of the publisher of the first TLA profile for the first TLA profile by using a private key.

7. The method according to any one of claims 1 to 6, wherein
the trust level of the trustee is carried in a trust level assessment certificate generated by the TLA; and the trust level assessment certificate further comprises a first TLA profile number corresponding to the first TLA profile, and the first TLA profile number indicates a TLA profile used for performing trust assessment on the trustee.

8. The method according to claim 7, wherein the trust level assessment certificate further comprises any one or more of a version number, a serial number, a signature algorithm identifier, a name of the TLA, validity time, a name of the trustee, public key information of the TLA, an identifier of the TLA, the identifier of the trustee, an evidence proof number of the evidence, a Merkle root, or a signature of the TLA, wherein
the serial number uniquely identifies the trust level assessment certificate of the trustee;
the signature algorithm identifier indicates a signature algorithm used by the TLA to sign the trust level assessment certificate;
the validity time indicates validity time of the trust level assessment certificate;
the public key information of the TLA comprises information about a public key corresponding to a private key of the TLA;
the evidence proof number is a number returned by an evidence storage center to the trustee after the trustee submits the evidence to the evidence storage center;
the Merkle root is generated by the trustee based on the claim in the evidence; and
the signature of the TLA is a signature of the TLA for content of the trust level assessment certificate by using the private key.

9. The method according to any one of claims 1 to 8, wherein the evidence further comprises metadata of the trustee and/or a signature of the trustee; and
the metadata of the trustee comprises any one or more of the identifier of the trustee, a timestamp, a version number of the evidence, or the Merkle root, wherein
the timestamp indicates time at which the trustee generates the evidence;
the Merkle root is generated by the trustee based on the claim in the evidence; and
the signature of the trustee is a signature of the trustee for the claim in the evidence and the metadata of the trustee by using a private key.

10. The method according to any one of claims 2 to 9, further comprising:
receiving, by the TLA, a trust level assessment request, wherein the trust level assessment request comprises the identifier of the trustee, and the trust level assessment request indicates to perform trust assessment on the trustee;
sending, by the TLA, an evidence request to the trustee, wherein the evidence request comprises the claim name comprised in the claim list in the first TLA profile, and indicates the trustee to submit a claim corresponding to the claim name comprised in the claim list in the first TLA profile; and
receiving, by the TLA, an evidence response sent by the trustee, wherein the evidence response comprises the evidence.

11. The method according to claim 10, wherein the TLA stores one or more TLA profiles and a TLA profile use policy, the use policy indicates a default TLA profile and a priority of each TLA profile, and the first TLA profile is one of the one or more TLA profiles.

12. The method according to claim 11, wherein the trust level assessment request comprises one or more TLA profile numbers, and indicates the TLA to select a TLA profile from TLA profiles corresponding to the one or more TLA profile numbers to perform trust assessment on the trustee.

13. The method according to claim 12, further comprising:
selecting, based on the priority of each TLA profile, a TLA profile with a highest priority from the TLA profiles corresponding to the one or more TLA profile numbers as the first TLA profile.

14. The method according to claim 11, further comprising:
selecting, by the TLA, the default TLA profile as the first TLA profile when the trust level assessment request does not comprise a TLA profile number.

15. The method according to any one of claims 10 to 14, wherein the evidence response further comprises the evidence proof number, and the evidence proof number is the number returned by the evidence storage center to the trustee after the trustee submits the evidence to the evidence storage center.

16. The method according to any one of claims 1 to 14, further comprising:
receiving, by the TLA, an update request, and re-performing trust assessment on the trustee based on the update request, wherein the update request comprises the identifier of the trustee.

17. A trust assessment method, comprising:
receiving, by a trustee, an evidence request sent by a trust level assessor TLA, wherein the evidence request comprises a claim name comprised in a claim list in a first trust level assessment TLA profile, the claim name indicates the trustee to submit a claim corresponding to the claim name, and the claim corresponding to the claim name is used to describe related information of the trustee;
encapsulating, by the trustee, the claim corresponding to the claim name into evidence, wherein the evidence comprises one or more claims of the trustee; and
sending, by the trustee, the evidence to the TLA, for the TLA to perform trust assessment on the trustee based on the evidence and the first TLA profile, to obtain a trust level of the trustee, wherein
the first TLA profile comprises a plurality of trust levels and an assessment model corresponding to each trust level, an assessment model corresponding to a first trust level comprises a verification result of one or more claims required by the first trust level, and the first trust level is one of the plurality of trust levels.

18. The method according to claim 17, wherein the evidence further comprises metadata of the trustee and/or a signature of the trustee; and
the metadata of the trustee comprises any one or more of an identifier of the trustee, a timestamp, a version number of the evidence, or a Merkle root, wherein
the timestamp indicates time at which the trustee generates the evidence;
the Merkle root is generated by the trustee based on the claim in the evidence; and
the signature of the trustee is a signature of the trustee for the claim in the evidence and the metadata of the trustee.

19. A trust assessment system, comprising a trust level assessor TLA and a trustee, wherein
the TLA is configured to send an evidence request to the trustee, wherein the evidence request comprises a claim name comprised in a claim list in a first TLA profile, and indicates the trustee to submit a claim corresponding to the claim name comprised in the claim list in the first TLA profile;
the trustee is configured to encapsulate the claim corresponding to the claim name into evidence, wherein the evidence comprises one or more claims of the trustee; and
the TLA is further configured to perform trust assessment on the trustee based on the first TLA profile and the evidence, to obtain a trust level of the trustee, wherein
the first TLA profile comprises a plurality of trust levels and an assessment model corresponding to each trust level, an assessment model corresponding to a first trust level comprises a verification result of one or more claims required by the first trust level, and the first trust level is one of the plurality of trust levels.

20. A trust assessment apparatus, comprising:
a communication module, configured to receive evidence submitted by a trustee, wherein the evidence comprises one or more claims, and the one or more claims are used to describe related information of the trustee; and
a processing module, configured to perform trust assessment on the trustee based on a first trust level assessment TLA profile and the evidence, to obtain a trust level of the trustee, wherein
the first TLA profile comprises a plurality of trust levels and an assessment model corresponding to each trust level, an assessment model corresponding to a first trust level comprises a verification result of one or more claims required by the first trust level, and the first trust level is one of the plurality of trust levels.

21. A trust assessment apparatus, comprising:
a receiving module, configured to receive an evidence request sent by a trust level assessor TLA, wherein the evidence request comprises a claim name comprised in a claim list in a first trust level assessment TLA profile, the claim name indicates a trustee to submit a claim corresponding to the claim name, and the claim corresponding to the claim name is used to describe related information of the trustee;
a processing module, configured to encapsulate the claim corresponding to the claim name into evidence, wherein the evidence comprises one or more claims of the trustee; and
a sending module, configured to send the evidence to the TLA, for the TLA to perform trust assessment on the trustee based on the evidence and the first TLA profile, to obtain a trust level of the trustee, wherein
the first TLA profile comprises a plurality of trust levels and an assessment model corresponding to each trust level, an assessment model corresponding to a first trust level comprises a verification result of one or more claims required by the first trust level, and the first trust level is one of the plurality of trust levels.

22. A computing device, comprising a processor and a memory, wherein the memory is configured to store instructions, the processor is configured to execute the instructions, and when the processor executes the instructions, the method according to any one of claims 1 to 16 is implemented.

23. A network device, comprising a processor and a memory, wherein the memory is configured to store instructions, the processor is configured to execute the instructions, and when the processor executes the instructions, the method according to claim 17 or 18 is implemented.

24. A computer-readable storage medium, comprising computer program instructions, wherein when the computer program instructions are executed by a computing device, the computing device implements the method according to any one of claims 1 to 16.

25. A computer-readable storage medium, comprising computer program instructions, wherein when the computer program instructions are executed by a computing device, the computing device implements the method according to claim 17 or 18.
